# EUROPEAN PATENT SPECIFICATION

(11) **EP 0 297 361 B1**
(45) Date of publication and mention of the grant of the patent: **02.02.1994**
(21) Application number: 88109616.8
(22) Date of filing: 16.06.1988
(51) Int. Cl.: G02B 13/22, G02B 15/14

(54) **Telecentric image-forming system having variable magnifications**
Telezentrisches abbildendes System mit veränderlicher Vergrösserung
Système télécentrique de reproduction à magnifications variables

(30) Priority: 19.06.1987 JP 15803/87
(43) Date of publication of application: 04.01.1989
(73) Proprietor: Dainippon Screen Mfg. Co., Ltd., Kamikyo-ku Kyoto 602 (JP)
(72) Inventor: Wakimoto, Zenji Dainippon Screen Mfg. Co., Ltd., Horikawa-dori Kamikyo-ku Kyoto (JP); Hayashi, Takahisa Dainippon Screen Mfg. Co., Ltd., Horikawa-dori Kamikyo-ku Kyoto (JP)
(74) Representative: Goddar, Heinz J., Dr.

(56) References cited:
- EP-A- 0 240 002
- CH-A- 321 568
- GB-A- 1 260 923
- US-A- 4 526 443
- PATENT ABSTRACTS OF JAPAN, vol. 7, no. 15 (P-169)(1160), 21 January 1983; & JP-A-57169717

## Description

### BACKGROUND OF THE INVENTION

The present invention relates to a telecentric image-forming optical system as defined in Claim 1 through which a principal ray passes in parallel with an optical axis, and more particularly to a telecentric image-forming optical system capable of changing image-forming magnifications.

The telecentric image-forming optical system in accordance with the present invention can be utilized for a measuring projector and an optical measuring instrument. It is also utilized for an image-forming optical system of exposure apparatuses such as a color scanner, a laser plotter and the like.

A lens system in which the secondary focal point of an objective lens having a positive focal length coincides with the primary focal point of an eyepiece having a positive focal length in known as a telescopic system. When an object is placed in the vicinitity of the primary focal point of the object lens of the telescopic system, an inverted image is formed in the vicinity of the secondary focal point of the eyepiece to form a telecentric image-forming optical system through which a principal ray passes in parallel with an optical axis.

In this case, the magnification of a real image with respect to the object is the ratio of the focal length of the eyepiece to the focal length of the objective lens, and an image-forming magnification is not varied if the object distance is varied. This is the characteristic feature of the above lens system. Utilizing the feature, a telecentric image-forming optical system is frequently used for the optical system of a measuring instrument which requires an accurate dimension measurement as disclosed in Japanese Patent Laid-Open Publication (Kokai) No. 51-96336.

Utilizing the feature of the telecentric image-forming optical system that a principal ray passes therethrough in parallel with an optical axis, it is utilized as a relay lens which reconstructs an image, formed by a lens system placed forward, as an object of the lens system placed backward. For example, the United States Patent Application Ser. No.33,582 (filed on April 1, 1987) has disclosed art in which a two-step telecentric optical system is used for a laser exposure apparatus, and in particular, for an image-forming optical system of a laser plotter.

The image formation magnification of such a telecentric image-forming optical system is kept constant if an object distance is varied and is determined only by the combination of focal lengths of lenses to be used.

This causes the following problem: If the dimension of a lens or a lens group is not processed as designed or a lens or a lens group is erroneously arranged or adjusted in assembling them, that is, if an image-forming magnification is different from that determined in designing, according to conventional art, it is difficult to correct such an error.

Further, according to conventional telecentric imageforming optical systems, it is very difficult to vary the magnification more than twofold with the distance between an object and an image constant without degrading the quality of a formed image below a certain level keeping the distance between the object and the image unchanged and the principal ray traveling in parallel with an optical axis. Conventionally, it is possible to vary a magnification not more than twofold, for example up to the extent of 1.5 or 1.8 times (as disclosed in the United States Patent Application Ser. No. 33,582). For example, in a laser plotter, art work can be performed very effectively if the reproduction accuracy is varied more than twofold according to the nature of a product. Therefore, the provision of a telecentric image-forming optical system capable of varying magnification more than twofold without degrading the quality of a formed image has been desired.

### SUMMARY OF THE INVENTION

The present invention was made to solve the above-described problem and has for its essential object to provide a telecentric image-forming optical system which enables the correction of an image-forming magnification, whereby an error which has occurred in processing a lens is compensated.

It is a second object of the present invention to provide a telecentric image-forming optical system capable of varying the magnification more than twofold with an image-forming magnification performance kept satisfactory.

The aforementioned objects are accomplished by the present invention, with a telecentric image-forming optical system, which includes a first lens group having a positive focal length f₁, a second lens group having a positive focal length f₂, and a third lens group having a positive focal length f₃ arranged in this order, wherein the third lens group is so disposed that the principal focal point thereof coincides with the secondary focal point of the first lens group; the focal length of the second lens group is selected to satisfy the conditions:

$\text{f₁/2 < f₂; and}$
$\text{f₃/2 < f₂,}$

and movable along an optical axis and disposed so as to be placed in the vicinity of the position at which both of the focal points substantially coincide with each other; and an image-forming magnification can be varied by moving along the optical axis the second lens group with the distance between the object and an image substantially kept constant.

According to the above-described construction, the movement of the second lens group causes the composite focal point of the first lens group and the second lens group to move. In order to maintain the feature of the telecentric optical system, it is necessary to move the third lens group according to the variation of the movement amount of the second lens group so that the principal focal point thereof coincides with the composite focal point.

However, the focal lengths of the respective lens groups are appropriately selected, whereby in the case that the movement amount of the second lens group is small, the movement amount of the composite focal point of the first and second lens groups can be reduced to a great extent, whereby the telecentric optical system performs its function, without any movement of the third lens group.

It is necessary to move the second lens group in a great extent so as to vary the magnification more than twofold. To this end, at least the third lens group must be movable along the optical axis, and the focal length f₂ of the second lens group must satisfy the following conditions:

$\text{f₂ < 2f₁; and}$
$\text{f₂ < 2f₃,}$

and the third lens group is moved so that the principal focal point thereof coincides with the composite secondary focal point of the first and second group lenses which move according to the movement of the second group lens. Thus, a complete telecentric image-forming optical system is formed. Accordingly, an image-forming magnification will not be varied if an object distance is changed. However, when the object distance is changed, the image position is also changed. Therefore, the distance between the object and the image can be kept constant by appropriately selecting the object distance irrespective of image-forming magnifications. In this case, when the first lens group is further movable from the object position and the object position is taken as a reference position, the image position is not changed to form a complete telecentric zoom image-forming optical system. On the other hand, when the image position is taken as the reference position, the first lens group is not necessarily movable. In this case, the telecentric optical system performs its function by allowing it to move as a unit along the optical axis.

Both an object and an image are required to be disposed outside the optical system, that is, the object is required to be disposed forward from the first lens group and the image is required to be disposed backward from the third lens group. Therefore, the focal lengths f₁, f₂, and f₃ of the respective lens groups are required to satisfy at least the following conditions:

$\text{f₁/2 < f₂; and}$
$\text{f₃/2 < f₂}$

If the focal length f₂ is small in comparison with the focal lengths f₁ and f₃, the curvature of field comes into great and the dimension of an effective image plane cannot be large. The increase of the focal length f₂ improves the extent of the flatness of an image plane and increases the dimension of the effective image plane. Contrary to the above, if the focal length f₂ is too long compared with the focal lengths f₁ and f₃, an image-forming magnification will not vary even though the second lens group is moved toward the first lens group or the third lens group as close as possible. Accordingly, it is necessary that the focal length f₂ is required to satisfy the following conditions:

$\text{f₂ < 2f₁; and}$
$\text{f₂ < 2f₃}$

in increasing the focal length f₂ so that the telecentric image-forming optical system has a magnification more than twofold in consideration of aberration and the dimension of image plane.

Accordingly, the following conditions will result from the above:

$\text{f₁/2 < f₂ < 2f₁ ; and}$
$\text{f₃/2 < f₂<2f₃}$

If only a fine adjustment of an image-forming magnification is necessary, the following conditions are not necessary to be satisfied:

$\text{f₂ < 2f₁; and}$
$\text{f₂ < 2f₃}$

### BRIEF DESCRIPTION OF THE DRAWINGS

Figure 1 is a diagrammatic view illustrating the principle of the telecentric image-forming optical system in accordance with the present invention;
Figure 2 is a diagrammatic view in consideration of the spherical aberration of the telecentric image-forming optical system in accordance with the present invention;
Figure 3 is a lens construction view showing a first embodiment of the telecentric image-forming optical system in accordance with the present invention;
Figures 4-(A) through 4-(C) are aberration curves resulting from the changes of image-forming magnifications in the first embodiment;
Figure 5 is a lens construction showing a second embodiment;
Figures 6-(A) through 6-(C) are aberration curves resulting from the changes of image-forming magnifications in the second embodiment;
Figure 7 is a lens construction showing a third embodiment;
Figures 8-(A) through 8-(C) are aberration curves resulting from the changes of image-forming magnifications in the third embodiment;
Figure 9 is a lens construction showing a fourth embodiment;
Figures 10-(A) through 10-(C) are aberration curves resulting from the changes of image-forming magnifications in the fourth embodiment;
Figure 11 is a perspective view of a laser plotter system;
Figure 12 is a perspective view of a known exposure head of a laser plotter;
Figure 13-(A) is a lens construction view showing the telecentric image-forming optical system of the exposure head shown in Figure 12; and

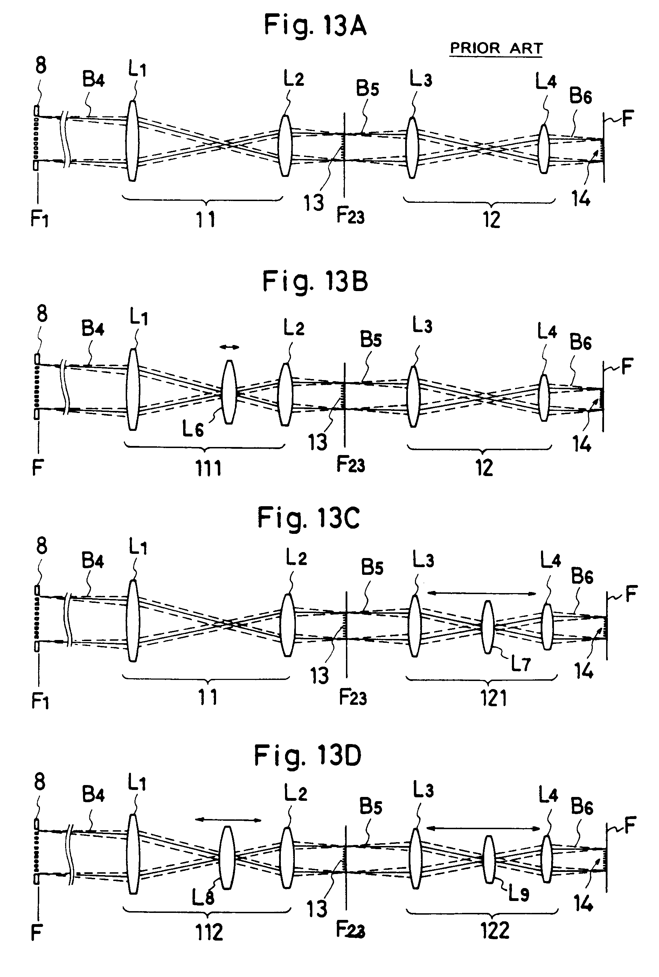

Figures 13-(B) through 13-(D) are explanatory views of lens constructions showing an application example of the present invention.

### DETAILED DESCRIPTION OF THE INVENTION

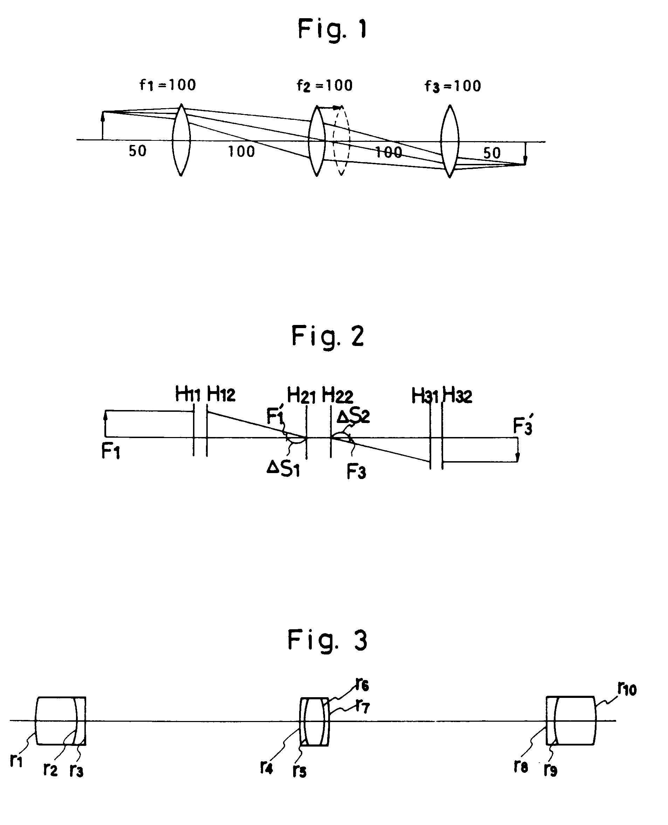

Figure 1 is a schematic diagram for describing the principle of a telecentric image-forming optical system, in accordance with the present invention. As shown in Figure 1, the focal lengths of first, second, and third lenses are 100 and the intervals therebetween are 100, respectively. Assuming that an object is placed 50 forward from the first lens, an image is formed 50 backward from the third lens and the magnification of the image is 1.

When the second lens is moved 10 backward (toward the third lens) along the optical axis, the position of the composite secondary focal point of the first and the second lens is moved 1.1 toward the first lens. Accordingly, it is necessary to move the third lens 1.1 forward to maintain a complete telecentric optical system. However, since the movement amount thereof is only 1% of the focal length of the third lens, this optical system can be practically used as a telecentric optical system even though the third lens is not moved. When the position of the object is not changed, the image position moves 0.226 backward, which value is approximately the same as the aberration amount of the lens. Whereas, the variation amount may be ignored, though depending on the aperture ratio of the of the lens.

In this case, the composite focal length of the first and second lenses is 111.1 and the magnification of the image is 0.9.

Contrary to the above, when the second lens is moved 10 forward (toward the first lens) along the optical axis from the position shown by the solid line in Figure 1, the synthetic focal length of the first and second lenses is 90.909 and the magnification of the formed image is 1.1. That is, the magnification ratio of the optical system becomes 1.22 by the forward and backward movements of the second lens.

All the first, second, and third lenses used in this embodiment are thin single lenses in order to simplify the drawings and description made above, but in practice, a plurality of lenses are used to construct the first lens group, the second lens group and the third lens group.

Therefore, it is necessary to consider the principal points thereof. When the first lens group (principal points thereof are H11 and H12) and the third lens group (principal points thereof are H31 and H32) have spherical aberration, light entering the telecentric system in parallel with the optical axis does not pass through the focal point. Therefore, as shown in Figure 2, it is necessary that the position obtained by adding the spherical aberration amount ΔS (ΔS1, ΔS2) to the focal point coincides with the principal points H21 and H22 of the second lens group. The spherical aberration amount ΔS becomes positive or negative depending on the structure of the first lens group and third lens group.

In the following embodiments, the dislocation of the principal points of the second lens group is considered. Thus, the optical systems to be described hereinafter forms telecentric image-forming optical systems.

### First Embodiment

The first embodiment shows an example of a telecentric image-forming optical system which allows the adjustment of the above-described image-forming magnification. Lens data of the respective lens groups shown in Figure 3 are listed in TABLE 1.

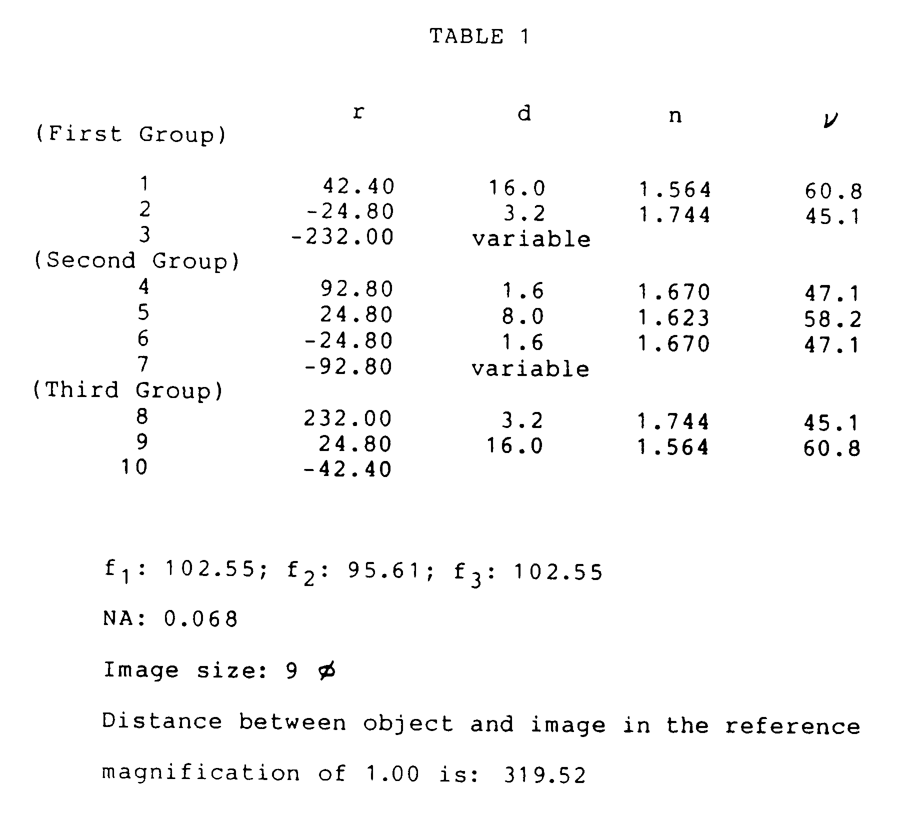

The arrangement of the respective lenses corresponding to the respective image-forming magnifications 1.11, 1.00 and 0.9 in this embodiment are shown in TABLE 2.

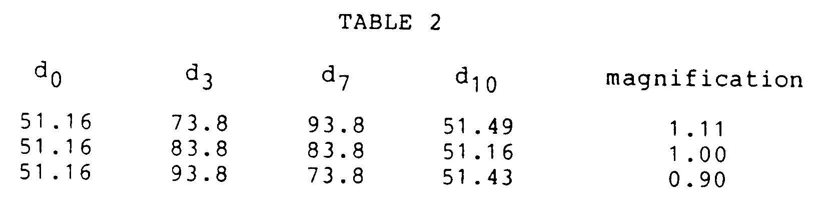

Where r represents the radius of curvature of the faces of the respective lenses;
d shows the distance between the adjacent faces of the lenses;
n denotes the refractive index of the respective lenses relative to the wavelength of 587.6nm;
ν represents the Abbe number of the respective lenses; and
f is the composite focal length of the respective lens groups.

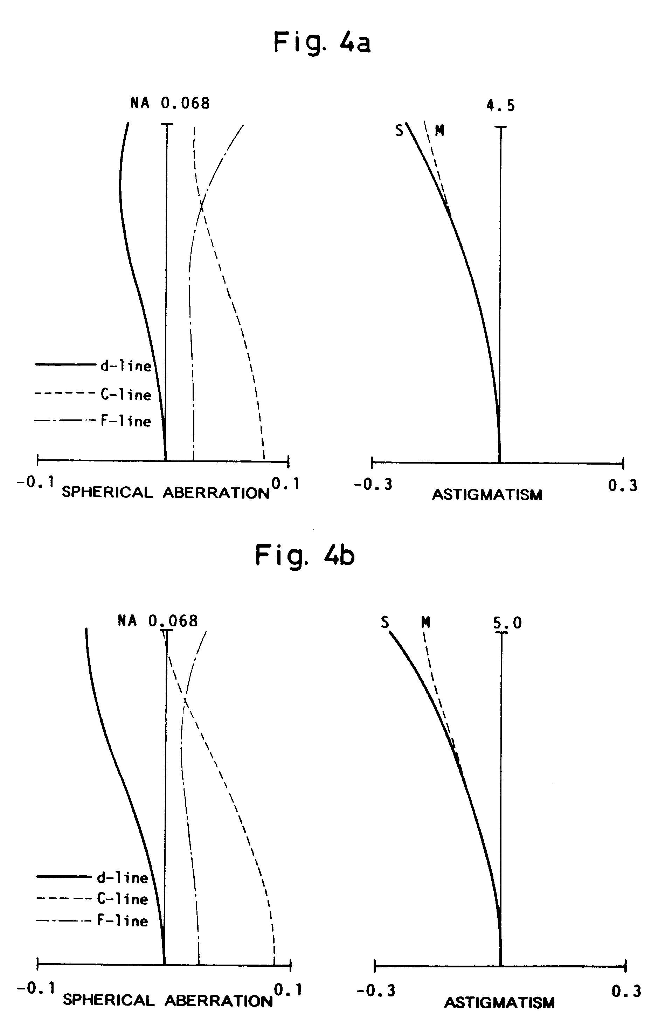

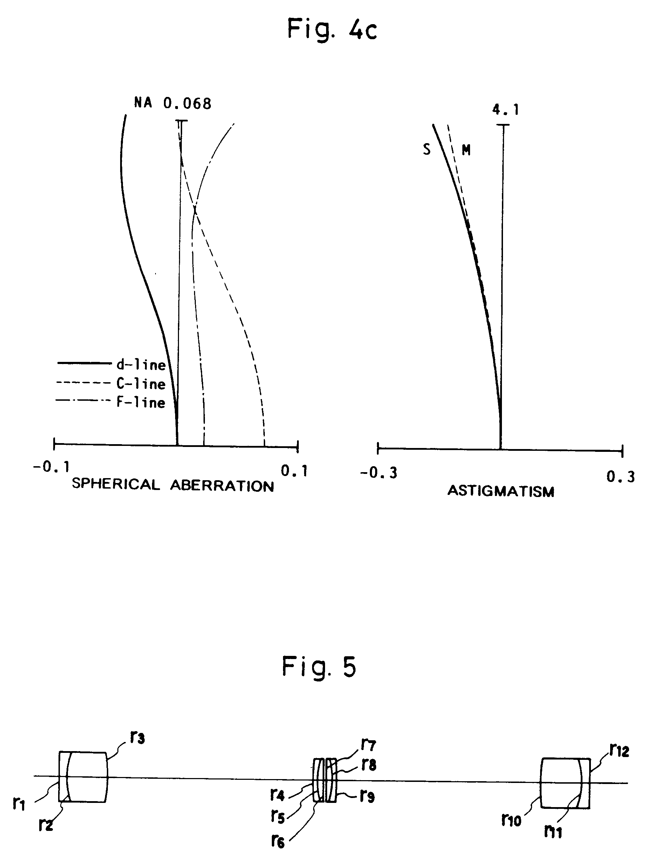

Figures 4(A)-4(C) are aberration curves showing the spherical aberration and the astigmatism, respectively, obtained when the reference magnification is 1.00 and the second lens group is moved 10 forward and backward in the first embodiment, with the result that the image-forming magnifications become 1.11 and 0.90. The origin is at the image distance d₁₀ as described above.

There is no problem in practical use if the image distance d₁₀ is fixed to 51.16, but it is preferabe either that the third lens group is moved in a slight amount or that the image surface is moved in less amount than that of the third lens group.

### Second Embodiment

In the second embodiment shown in Figure 5, the telecentric characteristic and the movement of the respective focal points are required to be considered when the lens system is bright. In this embodiment, the second lens group includes two separable sub-groups. This embodiment shows that with the movement of the second lens group, the interval between the two groups is varied, whereby the telecentric characteristic is maintained and the image position is not changed with the first and third lens groups fixed.

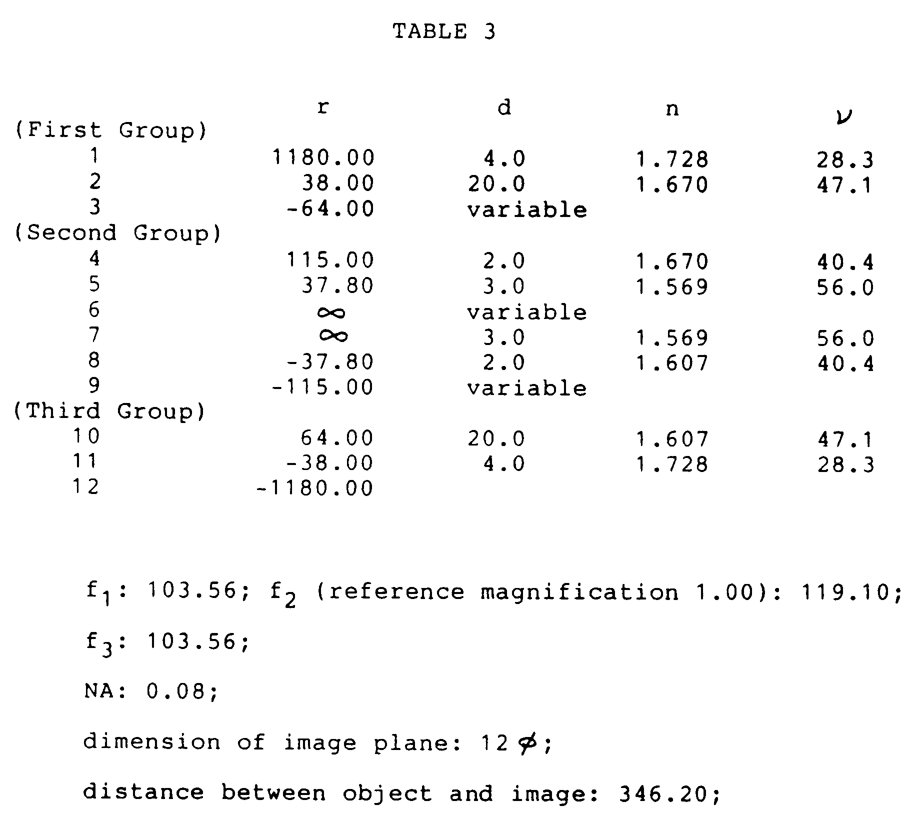

The arrangements of the respective lenses with respect to the image-forming magnifications 1.11, 1.00, and 0.91 are shown in TABLE 4.

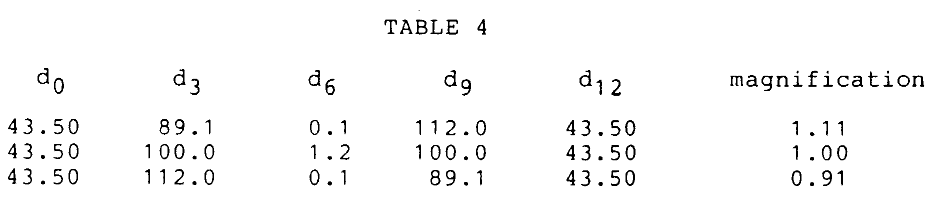

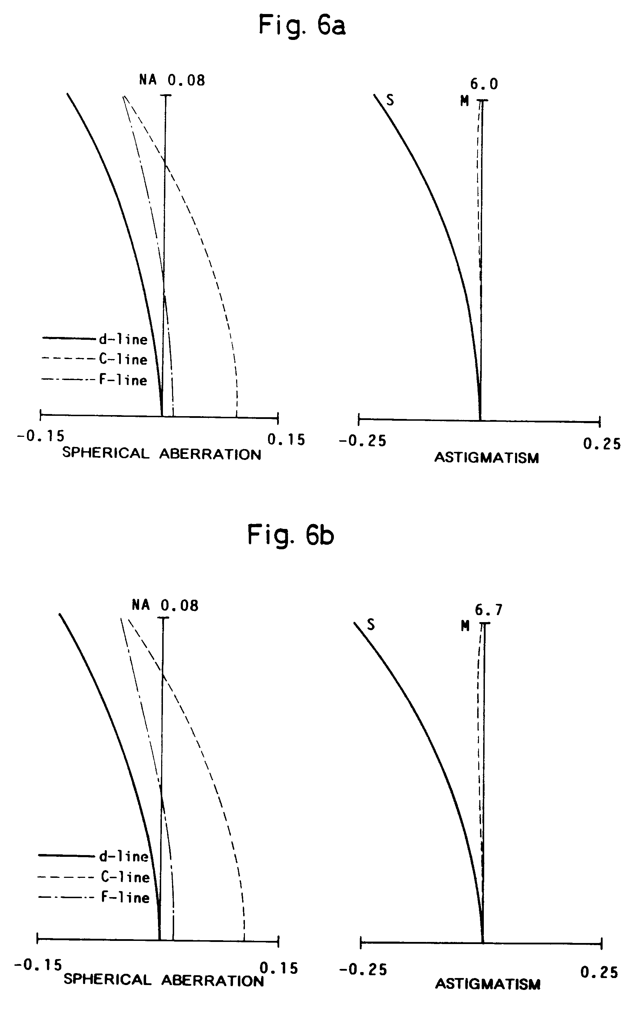

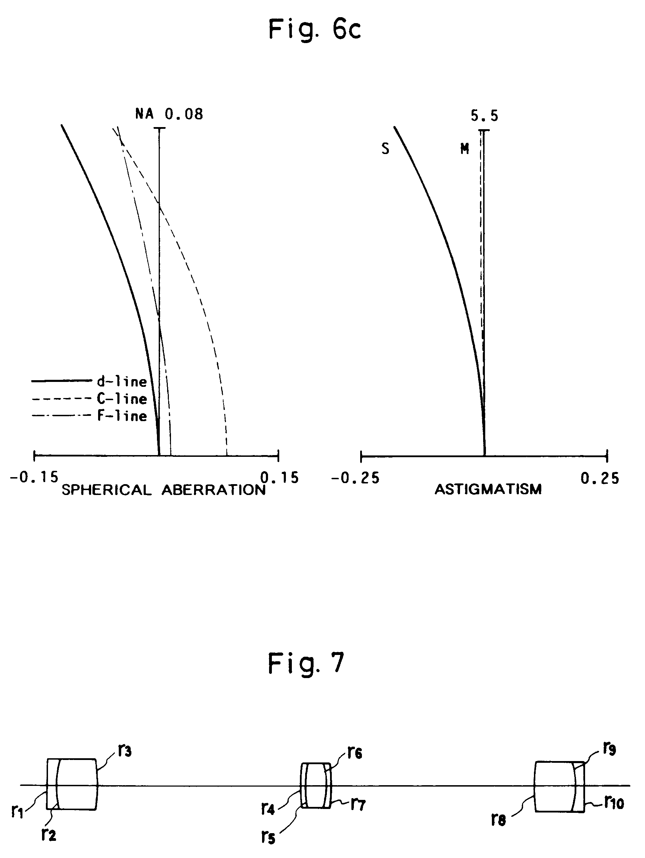

Figures 6(A)-6(C) are aberration curves showing the spherical aberration and astigmatism, respectively, when the image-forming magnifications are 1.00, 1.11 and 0.91 obtained by changing the interval between the faces of curvatures r₆ and r₇ of the second lens group with the movement of the second lens group.

In this embodiment, since the second group is separable, the image distance d₁₂ can be fixed with the third lens group fixed.

### Third Embodiment

In the third embodiment shown in Figure 7, the second lens group is moved in a great amount so as to greatly change the image-forming magnification of the telecentric image-forming optical system. In this case, the variation of the composite focal point of the first lens group and the second lens group becomes great. Accordingly, the third lens group is moved according to the movement of the composite focal point so that the primary focal point of the third lens coincides with the composite focal point.

In this case, the optical system forms a complete image-forming optical system. Consequently, even though the object distance is moved, the image-forming magnification previously set does not vary.

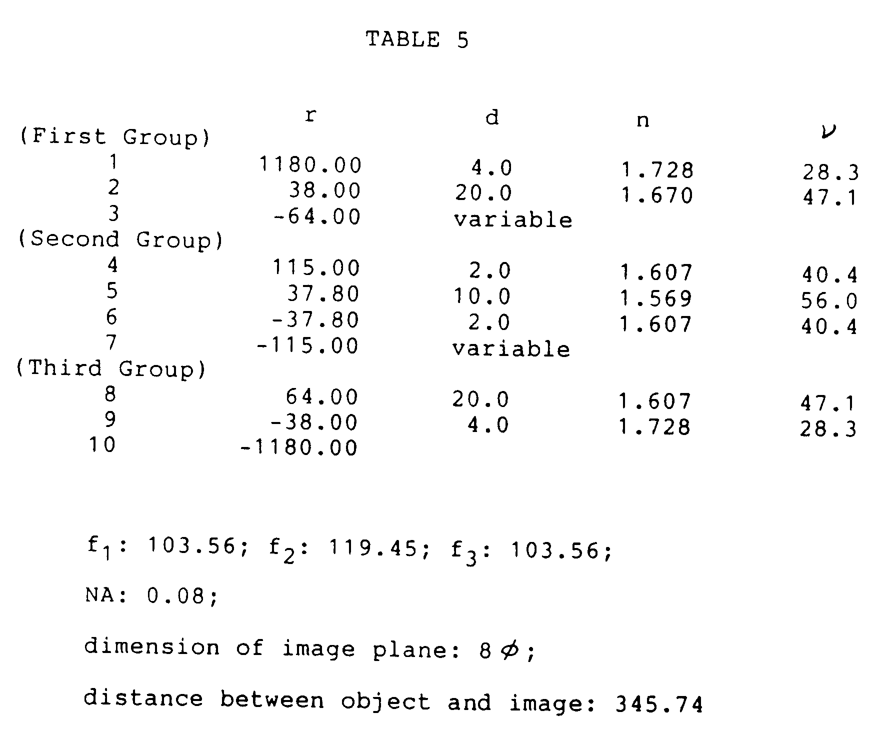

The arrangements of the respective lenses corresponding to the image-forming magnifications 1.73, 1.00 and 0.58 in this embodiment are shown in TABLE 6.

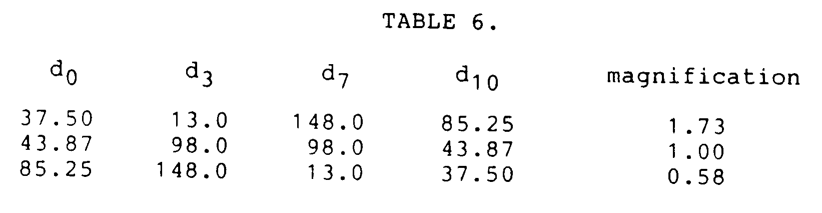

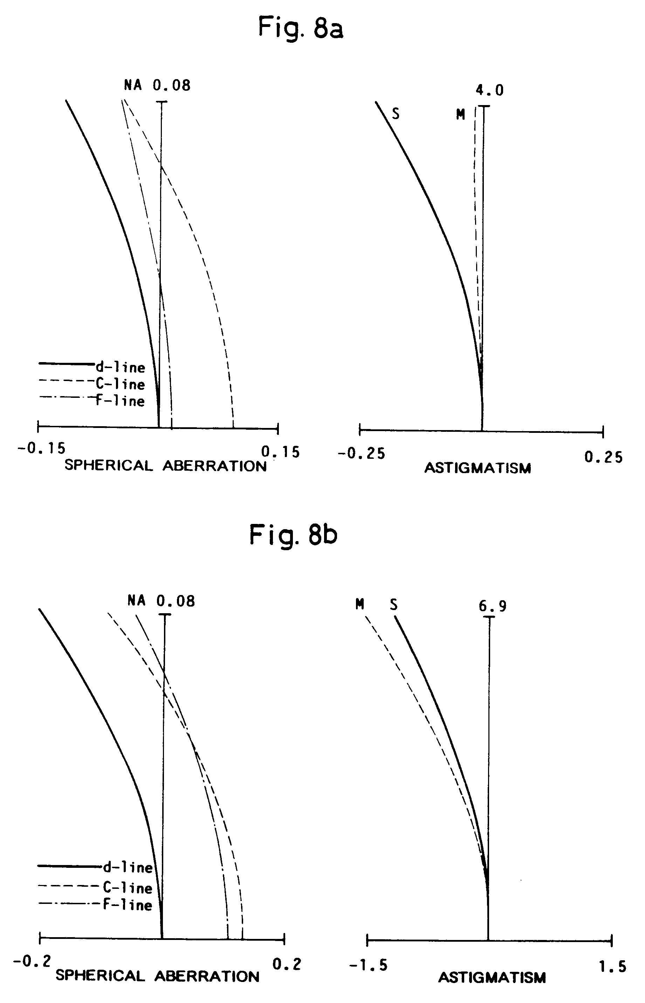

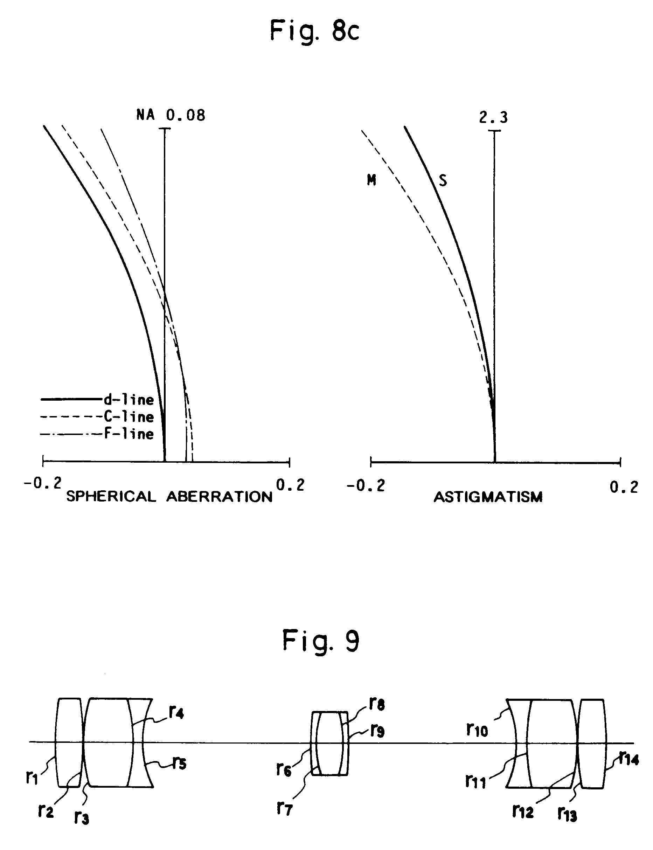

Figures 8(A)-8(C) show the aberration curves showing the spherical aberration and astigmatism, respectively, when the image-forming magnifications are 1.00, 1.73 and 0.58.

In this embodiment, the magnification ratio of the formed image is 1.73/0.58, namely, 2.98 according to the above values, that is, the magnification is more than twofold without degrading the image-forming performance.

### Fourth Embodiment

The fourth embodiment shown in Figure 9 shows, similarly to the third embodiment, a telecentric image-forming optical system, capable of forming an image at a relatively great magnification, in which first lens group and third lens group consist of three lenses, respectively. Lens data of the respective lens groups shown in Figure 9 are listed in TABLE 7.

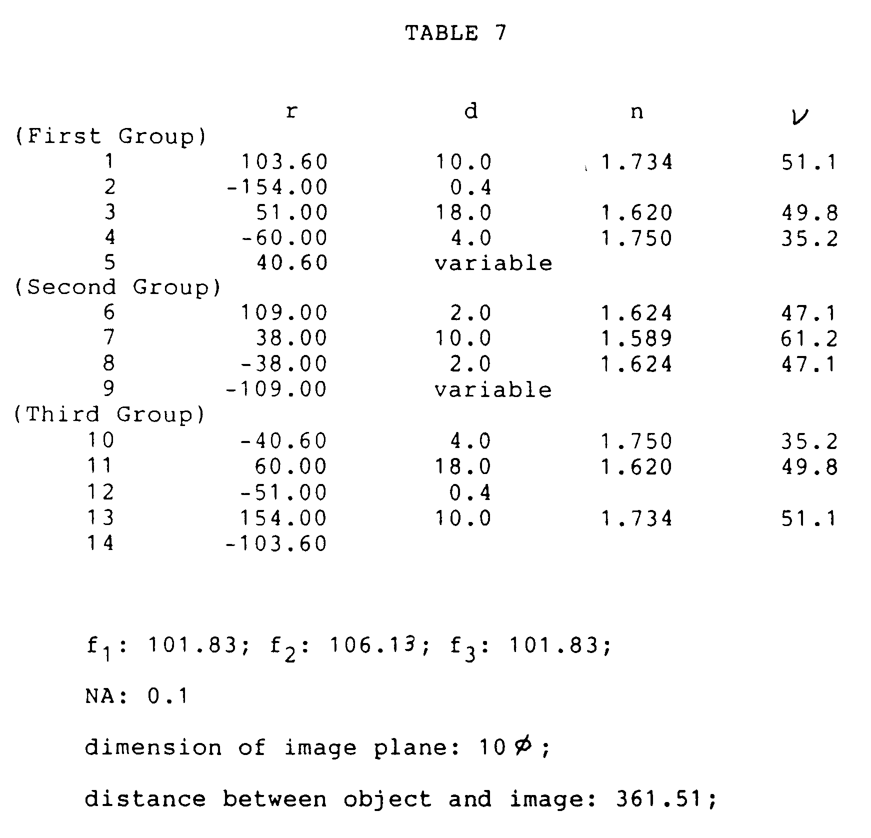

The arrangements of the lenses corresponding to image-forming magnifications 1.50. 1.00 and 0.67 in this embodiment are shown in TABLE 8.

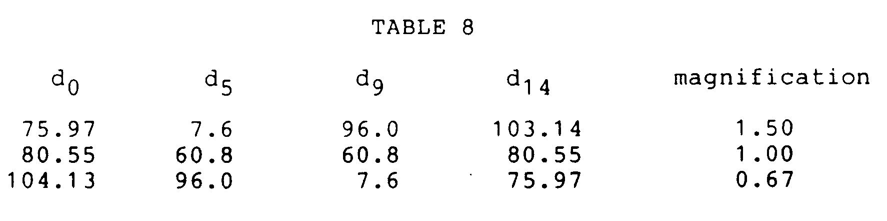

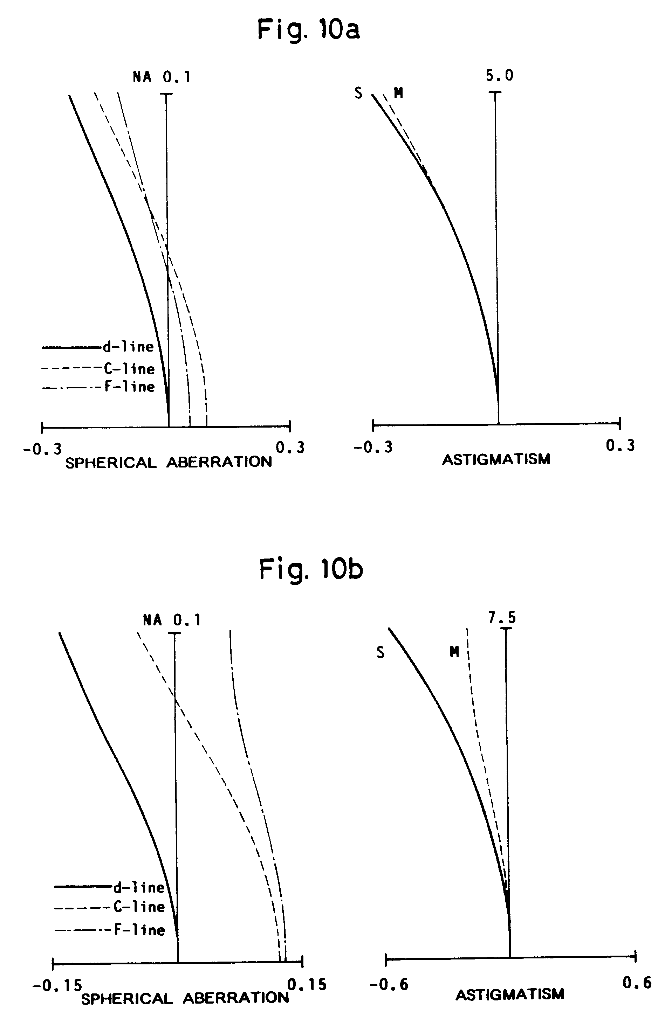

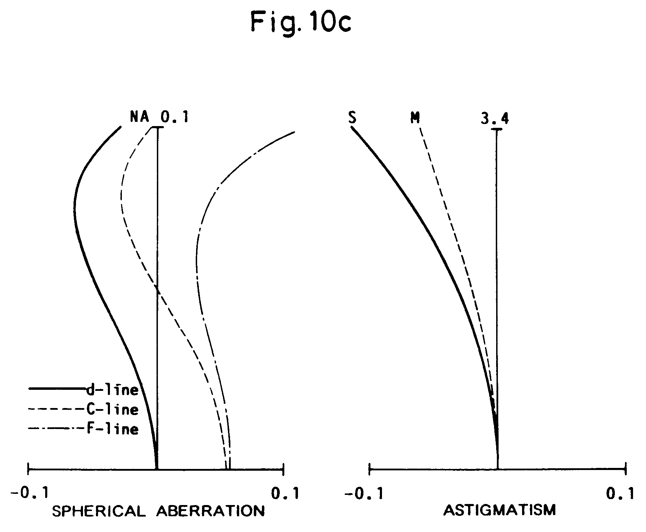

Figures 10(A)-10(C) show the aberration curves showing the spherical aberration and astigmatism, respectively, when the image-forming magnifications are 1.00, 1.50 and 0.67.

In this embodiment, the magnification ratio is 1.50/0.67, namely, 2.24. That is, the telecentric image-forming optical system has the magnification more than twofold in this range, while it maintains a preferable formed image-forming performance.

In the optical systems described in the first through fourth embodiments, each of the lens groups consists of achromatic lenses as used in normal magnification-varying optical systems.

If these telecentric image-forming optical systems are used as relay lenses of a laser optical system, it is unnecessary that the second lens group does not consist of the achromatic lenses. In practice, the second lens group may consist of a single lens. In this case, an achromatism can be effected by combining the second lens group with the first lens group and the third lens group as necessary.

In the above-described embodiments, the focal lengths of the first lens group is equal to that of the third lens group (reference magnification is 1.00). However, the focal lengths thereof can be varied as necessary. In this case, the reference magnification may not come into 1.00.

In the above-described embodiments, the relationship of the focal lengths of the respective lens groups is f₁≃f₂≃f₃. This is because, if the value of f₂ is smaller than those of f₁ and f₃, the curvature of field will become large, which causes the dimension of the effective image plane to be restricted.

In order that the image surface can be flattened and the dimension of the effective image surface can be increased, the focal length f₂ of the second lens group should be long.

### Application Example

The telecentric image-forming optical system according to the present invention can be applied to an exposure apparatus such as a laser plotter.

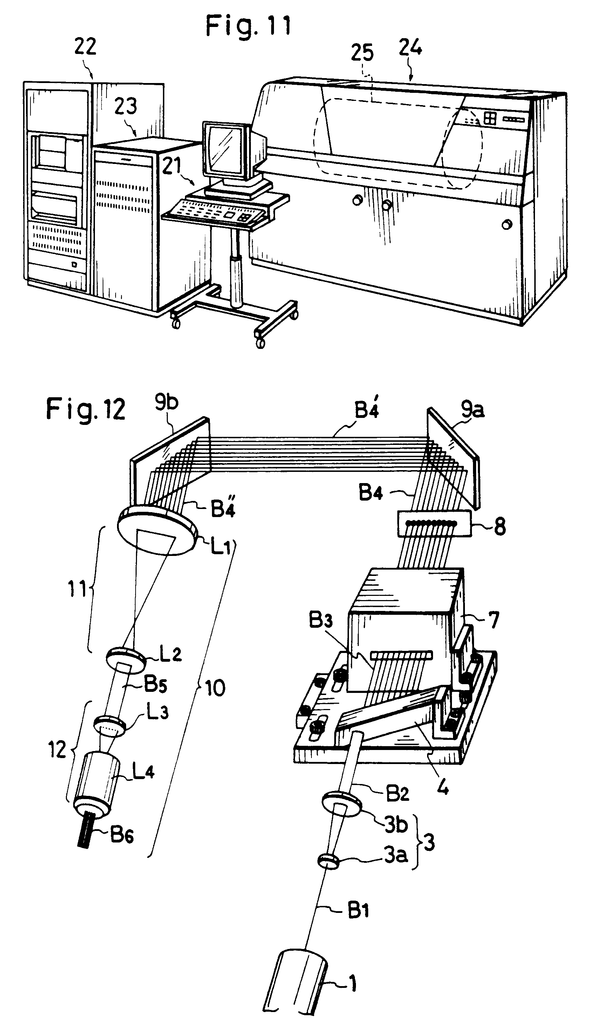

Figure 11 shows an external appearance of a laser plotter system. Such system is currently used for an art work for manufacturing at a high speed and with a high accuracy the photo-mask of a printed wiring board. A cylindrical scanning-type laser plotter shown in Figure 11 comprises a console 21, a data processor 23 for processing data inputted from the console 21 or magnetic tape, a convertor 22 for converting a processed data into electrical signals, and a recorder for scanning and recording an image on a photosensitive film mounted on a cylinder 25 in response to the signals transmitted from the convertor 22.

An image is scanned and recorded by an exposure head as shown in Figure 12 which moves in parallel with the rotation axis of the cylinder 25.

A laser beam B₁ emitted from a laser tube 1 becomes a beam B₂ whose diameter is expanded by a beam expander 3 comprising lenses 3a and 3b. The beam B₂ is divided into a plurality of beams B₃ by a beam splitter 4. The beams B₃ modulated by an optical modulator 7 passes through an aperture plate 8. Thereafter, it is reflected by a first mirror 9a and a second mirror 9b, and then, is received by an image-forming optical system 10.

The image-forming optical system 10 comprises a first telecentric optical system 11 including lenses L₁ and L₂ and a second telecentric optical system 12 including lenses L₃ and L₄. Beams B₄˝ reflected by the second mirror 9b are reduced in the width to form beams B₅. The beams B₅ are relayed by the second telecentric optical system 12 to form beams B₆. As a result, an image is reproduced on the film by the beams B₆.

Figure 13-(A) shows a vertical longitudinal sectional view of this image-forming optical system and how light rays advance therein. The image 13 of apertures provided on the aperture plate 8, which is placed at a surface F₁ , is formed on an image surface F₂₃ by the telecentric optical system 11. The image 13 is relayed as an object to an image surface F by the second telecentric optical system 12 to form an image 14.

Figures 13-(B) through 13-(C) are explanatory views showing an image-forming optical system of the present invention in contrast with that shown in Figure 13-(A).

At least one of the first telecentric optical system 11 and the second telecentric optical system 12 constitutes a telecentric image-forming optical system comprising three lens groups in accordance with the present invention. According to such a construction, if there is an error in processing or assembling a lens, the error can be compensated by the second lens groups L₆ through L₉, whereby a desired image-forming magnification can be obtained. Further, when the image-forming optical system is so constructed that it has a magnification more than twofold by shifting the second lens group, for example, L₇ and L₉ in a great amount, an exposure with a coarse pattern (high speed) or an exposure with a dense pattern (low speed) can be effected by adjusting the intervals of the beams B₆ in wide or narrow.

It is possible to apply the telecentric image-forming optical system according to the present invention to the beam expander 3 shown in Figure 12.

The telecentric image-forming optical system generally has a feature that a magnification is not varied when an object distance and an image distance are changed. This makes it difficult to correct a magnification error resulting from a dimension error of a lens in processing it and other reasons. According to the present invention, a magnification can be varied keeping the feature of the telecentric optical system and a magnification can be varied with a high accuracy.

According to the present invention, keeping the feature of the telecentric optical system, the magnification ratio can be more than twofold. Accordingly, the application of this to exposure apparatuses such as a laser plotter allows a reliable and effective performance depending on whether an exposure is a coarse-finishing or a dense-finishing.

Further, the telecentric optical system according to the present invention is capable of varying a magnification continuously and is different from a conventional zoom lens, the positions of the entrance pupil and the exit pupil are infinite and not changed. Therefore, if the image-forming optical system according to the present invention is used as a relay lens system, it is easily connected to a subsequent optical system.

While the invention has been illustrated and described as embodied a telecentric image-forming system, it is not intended to the details shown, since various modifications and structural changes may be made without departing in any way from the present invention.

Without further analysis, the foregoing will so fully reveal the gist of the present invention that others can, by applying current knowledge, readily adapt it for various applications without omitting features that, from the standpoint of prior art, fairly constitute essential characteristics of the generic or specific aspects of this invention.

What is claimed as new and inventive is set forth in the appended claims.

## Claims

1. A variable telecentric image-forming optical system comprising a first lens group having a positive focal length f₁, a second lens group having a positive focal length f₂, and a third lens group having a positive focal length f₃ arranged in this order,
wherein said third lens group is so disposed that the principal focal point thereof substantially coincides with the secondary focal point of said first lens group;
the focal length of said second lens group is selected to satisfy the conditions:
$\text{f₁/2 < f₂; and}$
$\text{f₃/2 < f₂}$
and said second lens group is movable along the optical axis so as to be placed in the vicinity of the position at which both of said focal points substantially coincide with each other;
and
wherein the magnification of the optical system can be varied by moving the second lens group along the optical axis, whereby the distance between a predetermined object and its image is substantially kept constant.

2. A variable telecentric image-forming optical system as set forth in claim 1, wherein an interval between the object and said first lens group or an interval between the image and said third lens group is fixed.

3. A variable telecentric image-forming optical system as set forth in claim 2, wherein said second lens group includes two separate groups and the interval between said separate groups is varied according to the movement of said second lens group.

4. A variable telecentric image-forming optical system as set forth in claim 1, wherein at least said third lens group is movable along the optical axis, and the focal length f₂ of said movable second lens group satisfies the condition:
$\text{f₂ < 2f₁; and}$
$\text{f₂ < 2f₃,}$
and said third lens group is moved so that the principal focal point thereof coincides with the composite secondary focal point of said second lens group and first lens group which moves according to the movement of said second lens group, and the distance between the object and the first lens group is appropriately selected, whereby a magnification becomes great with the object and the image surface fixed.

5. A variable telecentric image-forming optical system as set forth in claim 4, wherein said magnification is more than twofold.

6. A variable telecentric image-forming optical system as set forth in any one of claims 1 through 5, wherein said focal length f₁ substantially is equal to said focal length f₃.

7. A variable telecentric image-forming optical system as set forth in claim 6, wherein said focal length f₂ is substantially approximated to said focal length f₁ or f₃.

8. A laser exposure apparatus for scanning a photosensitive material and recording an image thereon, the apparatus comprising:
a laser (1) for generating a laser beam (B3),
an optical modulator (7) for modulating the intensity of the laser beam (B3),
a scanner (9a, 9b) for scanning the photosensitive material,
characterised in that the apparatus further comprises a variable telecentric image-forming optical system as defined in claim 1.

9. A laser exposure apparatus as defined in claim 8, characterised in that it comprises a variable telecentric image-forming optical system as defined in claim 4.

10. A laser exposure apparatus as set forth in claim 9, characterised by a beam splitter (4) positioned between the laser (1) and the optical modulator (7) for producing a plurality of laser beams (B3).

## Patentansprüche

1. Veränderliches telezentrisches abbildendes System mit einer ersten Linseneinheit, die eine positive Brennweite f₁ besitzt, einer zweiten Linseneinheit, die eine positive Brennweite f₂ besitzt, und einer dritten Linseneinheit, die eine positive Brennweite f₃ besitzt, angeordnet in dieser Reihenfolge,
wobei die dritte Linseneinheit derart angeordnet ist, daß der Hauptbrennpunkt im wesentlichen mit dem zweiten Brennpunkt der ersten Linseneinheit übereinstimmt,
wobei die Brennweite der zweiten Linseneinheit so gewählt ist, daß sie die Bedingungen:
$\text{f₁/2 < f₂; und}$
$\text{f₃/2 < f₂}$
erfüllt, und
die zweite Linseneinheit entlang der optischen Achse beweglich ist, um in die Nähe der Position positioniert zu werden, an der beide Brennpunkte im wesentlichen - miteinander übereinstimmen, und
wobei die Vergrößerung des optischen Systems durch Bewegen der zweiten Linseneinheit entlang der optischen Achse variiert werden kann, wodurch die Distanz zwischen einem vorbestimmten Objekt und seinem Bild im wesentlichen konstant beibehalten wird.

2. Veränderliches telezentrisches abbildendes optisches System nach Anspruch 1, wobei ein Abstand zwischen dem Objekt und der ersten Linseneinheit oder ein Abstand zwischen dem Bild und der dritten Linseneinheit feststehend ist.

3. Veränderliches telezentrisches abbildendes optisches System nach Anspruch 2, wobei die zweite Linseneinheit zwei einzelne Gruppen enthält und ein Abstand zwischen den einzelnen Gruppen entsprechend der Bewegung der zweiten Linseneinheit variiert wird.

4. Veränderliches telezentrisches abbildendes optisches System nach Anspruch 1, wobei wenigstens die dritte Linseneinheit entlang der optischen Achse beweglich ist, und die Brennweite f₂ der beweglichen zweiten Linseneinheit die Bedingung:
$\text{f₂ < 2f₁; und}$
$\text{f₂ < 2f₃,}$
erfüllt, und
die dritte Linseneinheit so bewegt wird, daß ihr Hauptbrennpunkt mit dem geschaffenen zweiten Brennpunkt der zweiten Linseneinheit und der ersten Linseneinheit zusammenfällt, die sich entsprechend der Bewegung der zweiten Linseneinheit bewegt, und daß die Distanz zwischen dem Objekt und der ersten Linseneinheit geeignet gewählt wird, wodurch eine Vergrößerung groß wird, und das Objekt und die Bildfläche fest bleiben.

5. Veränderliches telezentrisches abbildendes optisches System nach Anspruch 4, wobei die Vergrößerung mehr als zweifach ist.

6. Veränderliches telezentrisches abbildendes optisches System nach einem der Ansprüche 1 bis 5, wobei die Brennweite f₁ im wesentlichen gleich zur Brennweite f₃ ist.

7. Veränderliches telezentrisches abbildendes optisches System nach Anspruch 6, wobei die Brennweite f₂ im wesentlichen der Brennweite f₁ oder f₃ angenähert ist.

8. Laserbelichtungsgerät zum Scannen eines fotoempfindlichen Materials und Speichern eines Bildes darauf, wobei das Gerät enthält:
einen Laser (1) zu Erzeugung eines Laserstrahls (B3), einen optischen Modulator (7) zum Modellieren der Intensität des Linsenstrahls (B3),
einen Scanner (9a, 9b) zum Scannen des fotoempfindlichen Materials,
dadurch gekennzeichnet, daß
das Gerät weiter ein veränderliches telezentrisches abbildendes optisches System wie in Anspruch 1 beschrieben enthält.

9. Laserbelichtungsgerät nach Anspruch 8, dadurch gekennzeichnet, daß es ein veränderliches telezentrisches abbildendes optisches System wie in Anspruch 4 beschrieben enthält.

10. Laserbelichtungsgerät nach Anspruch 9, gekennzeichnet durch einen Strahlteiler (4), der zwischen dem Laser (1) und dem optischen Modulator (7) zur Erzeugung einer Vielzahl von Laserstrahlen (B₃) angeordnet ist.

## Revendications

1. Système optique de formation d'image télécentrique variable comprenant un premier groupe de lentilles ayant une longueur locale positive f₁, un second groupe de lentilles ayant une longueur locale positive f₂, et un troisième groupe de lentilles ayant une longueur locale positive f₃, disposés dans cet ordre,
dans lequel ledit troisième groupe de lentilles est disposé de telle sorte que le point local principal de ce dernier coïncide sensiblement avec le point local secondaire dudit premier groupe de lentilles ;
la longueur locale dudit second groupe de lentilles est choisie pour satisfaire les conditions suivantes :
$\text{f₁/2 < f₂ ; et}$
$\text{f₃/2 < f₂}$
et ledit second groupe de lentilles peut être déplacé le long de l'axe optique de façon à être placé au voisinage de la position pour laquelle lesdits deux points locaux coïncident sensiblement l'un avec l'autre ; et
dans lequel le rapport d'agrandissement du système optique peut être modifié en déplaçant le second groupe de lentilles le long de l'axe optique, de sorte que la distance entre un objet prédéterminé et son image est sensiblement gardée constante.

2. Système optique de formation d'image télécentrique variable selon la revendication 1, dans lequel un intervalle entre l'objet et ledit premier groupe de lentilles ou un intervalle entre l'image et ledit troisième groupe de lentilles, est fixe.

3. Système optique de formation d'image télécentrique variable selon la revendication 2, dans lequel ledit second groupe de lentilles comprend deux groupes séparés et dans lequel l'intervalle entre lesdits groupes séparés est modifié selon le déplacement dudit second groupe de lentilles.

4. Système optique de formation d'image télécentrique variable selon la revendication 1, dans lequel au moins ledit troisième groupe de lentilles peut être déplacé le long de l'axe optique, et dans lequel la longueur locale f₂ dudit second groupe de lentilles, qui peut être déplacé, satisfait aux conditions suivantes :
$\text{f₂ < 2f₁ ; et}$
$\text{f₂ < 2f₃,}$
et dans lequel ledit troisième groupe de lentilles est déplacé de façon à ce que le point local principal de ce dernier coïncide avec le point focal secondaire composite dudit second groupe de lentilles et dudit premier groupe de lentilles, lequel point se déplace selon le déplacement dudit second groupe de lentilles, et la distance entre l'objet et le premier groupe de lentilles est sélectionnée de manière appropriée, de sorte qu'un rapport d'agrandissement devient considérable avec l'objet et la surface d'image fixes.

5. Système optique de formation d'image télécentrique variable selon la revendication 4, dans lequel ledit rapport d'agrandissement est supérieur à deux.

6. Système optique de formation d'image télécentrique variable selon l'une quelconque des revendications 1 à 5, dans lequel ladite longueur locale f₁ est sensiblement égale à ladite longueur locale f₃.

7. Système optique de formation d'image télécentrique variable selon la revendication 6, dans lequel ladite longueur locale f₂ est sensiblement approchée de ladite longueur locale f₁ ou f₃.

8. Appareil d'exposition par laser pour balayer un matériau photosensible et enregistrer une image dessus, l'appareil comprenant :
un laser (1) pour produire un faisceau laser (B3),
un modulateur optique (7) pour moduler l'intensité du faisceau laser (B3),
un dispositif à balayage (9a, 9b) pour balayer le matériau photosensible,
caractérisé en ce que l'appareil comprend, de plus, un système optique de formation d'image télécentrique variable selon la revendication 1.

9. Appareil d'exposition par laser selon la revendication 8, caractérisé en ce qu'il comprend un système optique de formation d'image télécentrique variable comme défini à la revendication 4.

10. Appareil d'exposition par laser selon la revendication 9, caractérisé par un séparateur de faisceau (4) positionné entre le laser (1) et le modulateur optique (7) pour produire une pluralité de faisceaux laser (B3).
